# EUROPEAN PATENT SPECIFICATION

(11) **EP 3 156 203 B1**
(45) Date of publication and mention of the grant of the patent: **07.08.2019**
(21) Application number: 14894913.4
(22) Date of filing: 16.06.2014
(51) Int. Cl.: B29C 45/44, B29C 33/44

(54) **RELEASE ASSISTANCE DEVICE FOR MOLDED ARTICLE**
AUSLÖSUNGSUNTERSTÜTZUNGSVORRICHTUNG FÜR FORMTEIL
DISPOSITIF D'ASSISTANCE AU DÉMOULAGE POUR ARTICLE MOULÉ

(43) Date of publication of application: 19.04.2017
(73) Proprietor: Ecovent Kabushiki Kaisha, Yokohama-shi, Kanagawa 2230057 (JP)
(72) Inventor: SAITO, Teruhiko, Nagai-shi Yamagata 993-0001 (JP)
(74) Representative: Samson & Partner Patentanwälte mbB
(86) International application number: PCT/JP2014/065862
(87) International publication number: WO 2015/193936

(56) References cited:
- JP-A- S5 884 740
- JP-A- H01 228 808
- JP-A- H06 126 749
- JP-A- 2001 079 898
- JP-A- 2002 137 266
- JP-A- 2002 137 266
- JP-A- 2003 039 508
- JP-A- 2003 039 508
- JP-U- H0 347 110
- JP-U- H0 347 110

## Description

### TECHNICAL FIELD

The present invention relates to the mold release assistance device of the molded article which makes mold release of the molded article manufactured smooth by making various plastic materials into raw materials. In the manufacturing process of the molded article by various plastics, it discloses the technology of performing the release process smoothly and reliably, the improvement technology for manufacturing a desired molded article, shortening the cycle time at the time of injection molding to these plastic molding as much as possible, an improved technique for manufacturing the desired molded article is required while shortening the cycle time during injection molding of these plastic molded articles as much as possible, in particular, when forming various plastic products having a three-dimensional or complicated shape or structure.

In order to manufacture various molded articles having such a complicated shape or structure, the indispensable mold device must inevitably have a complicated shape. Therefore, the articles formed as a combination of a plurality of parts also increases. In order to mold the molded articles of the complicated form and the complicated structure, the mold provided with the corresponding cavity of structure is prepared, after injecting the molten resin reliably into the cavity, appropriate releasing treatment is necessary at an appropriate timing after the lapse of time suitable for the solidification process.

### BACKGROUND ART

The materials considering weight saving and economic efficiency etc. are required in various office equipment and apparatus, various devices or parts used in automobiles and other transportation facilities, home appliances, various other industrial equipment and devices etc. The engineering plastics, which are highly functional resins with greatly improved physical properties such as mechanical strength, heat resistance and abrasion resistance, are spreading in a wide range of fields as a suitable material other than metal. Such highly functional resins are lightweight, easy to mold and color and further measures for improving various physical properties such as heat resistance, abrasion resistance and mechanical strength are actively promoted. As a result, many applications can obtain stable characteristics, so the applications are increasing more and more widely used in a wide range of fields.

The purpose and use of the resin molded article are various, the resin molded article covers a very wide range of fields including home appliances and other daily necessaries, office supplies, various industrial machinery and equipment, many transportation and transportation organizations including automobiles, railways, aircraft and the like. In many of these applications, the characteristics required in each field are different, many basic physical properties or characteristics such as weather resistance, heat resistance, abrasion resistance, solvent resistance, UV resistance are often required. In response to such a request, many improved techniques have been advanced, highly functional resins, so-called engineering plastics, have emerged, as a result of remarkable development after that, the use thereof has been increasing more and more with the advancement of technology by substitution with other materials in many fields and furthermore by many combinations and the like.

Particularly in the case of objects with complex three-dimensional structures, such as various parts and equipment components made of plastics, the molten resin will flow to the end of the cavity without excess or deficiency during integral molding processing according to the mold and must be filled reliably. However, it may be difficult to perform the molding process in the cycle time shortened as possible with the molded article having an excessively complicated shape or structure. As a result, many do not meet the request for reduction of man-hours. For example, in the case of one having a partially bending part though it is a simple part, a member in which a bent portion or an opening portion is indispensable, and a molded article which is one member but has partial recesses and protrusions and branches and which is difficult to release due to the occurrence of an undercut portion, even small parts often involve difficulties in forming processes in a single process.

As the structure is more complicated, the releasing process becomes difficult. Further, a connecting structure having a female pin receiving portion including many connector pins is required as in the constituent member of the multi-pole connector as the electric connecting member. Therefore, in manufacture of the female form connector, the corresponding connector pin receiving for a pole must be formed. When molding the connector body which has an opening with a large total area in response to this request, the process of complicated each of being suitable for each is needed.

In such a use, formation of the molded article provided with the electrode reception hole of a required number becomes indispensable, but difficulties arise when requiring a many pole extremely. Therefore, it is formed by dividing it into a plurality of steps for each part or unit which can be removed from the past, after that, appropriate parts such as adhesion, welding, screwing, connection assistant metal fittings etc. are applied by combining each part kind for each unit, in addition, countermeasures have been taken such that it is constituted as an assembly in a required form by appropriate means such as a combination of a metal or other reinforcing material. However, sometimes, in order to perform a combination work by manually managing such a plurality of members and parts, the manufacturing process becomes complicated, and it is often difficult to manufacture with compact size and simple configuration.

Patent reference 1 discloses a mold devise for resin mold comprises a cavity 2 of the mold used for resin mold article manufacture, a core 3 which can move relative to this cavity, an ejector plate 4 which is provided on the back of the core and movable relative to the core, and an inclined slide 6 which is connected to the inclined core portion 21 provided on one end side to form the undercut portion of the resin molded article, has an inclined pin 22 inserted through the core 3, and has a slide unit 23 that freely slides on the other end side of the inclined pin 22 with respect to the ejector plate 4. Especially the inclined slide 6 is provided with the projecting amount control means to which it shows the inclined pin 22 so that the quantity in which the inclined core portion 21 projects from the core 3 may become small as compared with the distance to which the ejector plate 4 moves forward to the core 3 side at the time of mold release with the cavity 2 and the core 3.

In the inclined slide mechanism disclosed in the Patent reference 1, in a release process, generating of an undercut part's bending and damage, etc. cannot be prevented thoroughly, and generating of the defective spot in the molded article itself cannot be prevented. Thus, although the Patent reference 1 is disclosing the mold provided with the inclined slide mechanism, it is impossible to respond adequately to essentially request to try to achieve the objectives, such as described above in as much as possible simple configuration.

Patent reference 1: Jpn. Pat. Appln. KOKAI Publication No. 10-264217JP H03 47110 U discloses a mold apparatus having two undercut parts and an inclined shaft. Further, a spring is used to pull out a slide pin from a first undercut. JP 2002 137266 A shows a mold apparatus having inclined slides. JP 2003 039508 A discloses an injection mold having two vertical shafts and an ejection pin.

### SUMMARY OF INVENTION

### PROBLEM TO BE SOLVED BY INVENTION

The problem given to the present invention is providing the mold release assistance device of the molded article which can smoothly release the molded article manufactured by making various plastic materials into raw materials. When manufacturing various products widely used in, for example, electric and electronic equipment, etc., using engineering plastics widely recognized as plastic molding materials, namely high performance resins as raw materials, especially, even if it is complicated equipment, the development of technologies that can be manufactured by smoothing mold release and making it possible with as few steps as possible has been problem.

In particular, when manufacturing complex molded article, the aggregation and placement of parts must be sufficiently taken into consideration. In the case where various molded articles made of plastic are required, it is desirable to take care so that a series of processes from mold manufacture to molding process can proceed smoothly. If the mold releasing process, which is the final stage of the molding process, is not smoothly carried out, efficient molding becomes difficult. Furthermore, when the occurrence of undercut parts and the like which are obstacles in mold release work is inevitable, the working efficiency is extremely lowered.

### MEANS FOR SOLVING PROBLEM

The invention according to claim 1 is a mold release assistance device of a molded article in a mold comprising an inclined slide mechanism, the device comprises an inclined shaft 10 which forms on an upper side thereof a horizontal portion 14 which makes a right angle, which forms near a part of an upper end thereof a vertically-shaped vertical region 11, which has a horizontal through-hole 13 in the vertical region, and which is formed so that a lower end of the vertical region becomes an inclined slide region 12 processed to tilt outward; and a vertical shaft 20 which is formed so that overall the vertical shaft is parallel to the vertical region 11 of the inclined shaft and is substantially the same length as the inclined shaft, and which has a pin member 21 which penetrates the horizontal through-hole 13 formed in the vertical region 11 of the inclined shaft and which is fixed in the horizontal direction so as to be freely moveable, and wherein the mold release assistance device is configured to facilitate smooth release due to the following the inclined shaft 10 and the vertical shaft 20 move vertically at the same time, and in conjunction with the approach of the inclined shaft to the vertical shaft when the inclined shaft rises, the tip of the pin member which penetrates the horizontal through-hole 13 projects from the through-hole and the tip of the pin member is in contact with a hold-down target 30 and holds down the target so that the target does not move.

The invention according to claim 2 is the mold release assistance device of the molded article according to claim 1, wherein the vertical region 11 of the inclined shaft is processed to the shape corresponding to the shape of a suspension part HP and a protruding part PP which are formed under the molded article MP. The invention according to claim 3 is the mold release assistance device of the molded article according to any of claims 1 and 2, wherein the pin member 21 fixed to the vertical shaft and a mechanism for operating the pin member are provided by the member according to the number of the protruding part PP to contact the tip of the pin member and are operated simultaneously.

The invention according to claim 4 is the mold release assistance device of the molded article according to any one of claims 1 to 3, wherein a position and an arrangement number of a part CP in the protruding part PP to contact the tip of the pin member are determined according to a form of the protruding part. The form of the protruding part means the shape, the size of the length, thickness and width of the protruding part, etc. The invention according to claim 5 is the mold release assistance device of the molded article according to any one of claims 1 to 4, wherein the inclined shaft 10, the vertical shaft 20 and the pin member 21 are made of metal. The inclined shaft, the vertical shaft and the pin member are preferably made of hard metal.

### EFFECT OF INVENTION

The mold release assistance device of the molded article according to the present invention is the structure comprises the inclined shaft which is formed the horizontal portion, and the vertical region having the horizontal through-hole, and which is formed so that a lower end of the vertical region becomes the inclined slide region, and the vertical shaft which is formed so that overall the vertical shaft is parallel to the vertical region and is substantially the same length as the inclined shaft, and which is provided a pin member which penetrates the horizontal through-hole and which is fixed so as to be freely moveable. Therefore, it is possible to manufacture with a simple structure. It is possible to assist and support smooth release by operation with the inclined shaft, the vertical shaft and the pin member without using an external control means.

In the above simple structure, the inclined shaft and the vertical shaft move vertically at the same time, the inclined shaft approaches the vertical shaft side together with the upward movement. With this movement, the tip of the pin member projects from the through-hole and the tip of the pin member is in contact with the hold-down target 30 and holds down the target so that the target does not move. Therefore, generating of deformation, a crack, winding, damage, etc. which tend to occur in the release process of the molded article in which an undercut part is formed under the molded article can be prevented reliably, and it becomes possible to release from mold smoothly.

In the mold release assistance device of the molded article according to the present invention, the vertical region of the inclined shaft is processed to the shape corresponding to the shape of the suspension part and the protruding part which are formed under the molded article, the pin member fixed to the vertical shaft and the mechanism for operating the pin member are provided by the member according to the number of the protruding part PP to contact the tip of the pin member and are operated simultaneously. In the present invention, the position and the arrangement number of the part CP in the protruding part PP to contact the tip of the pin member are determined according to the form, such as the shape, the size of the length, thickness and width of the protruding part, etc. Therefore, the present invention can be applied to various molded articles having complicated shapes widely used for electronic equipment etc., and can deal with a wide range of products.

### BRIEF DESCRIPTION OF DRAWINGS

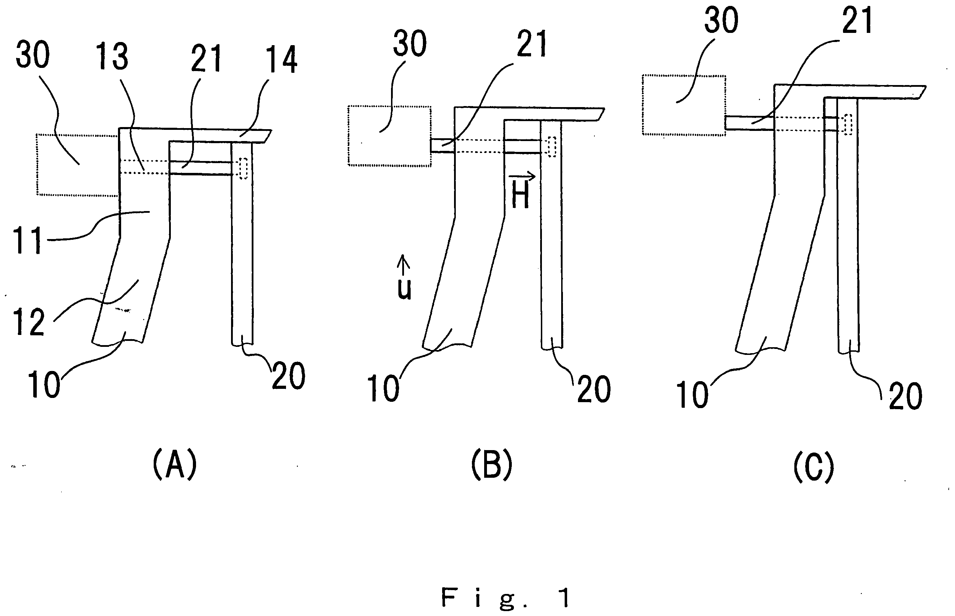

[Fig. 1] A figure is for explaining the configuration example of the principal part and the operation and the function in the case of mold release according to the mold release assistance device of the molded article in the present invention, with (A) being the operating state at the time of the mold release start, (B) being the operating state in the middle of the shaft rise, and (C) being the operating state at the time of the maximum rise of the shaft.

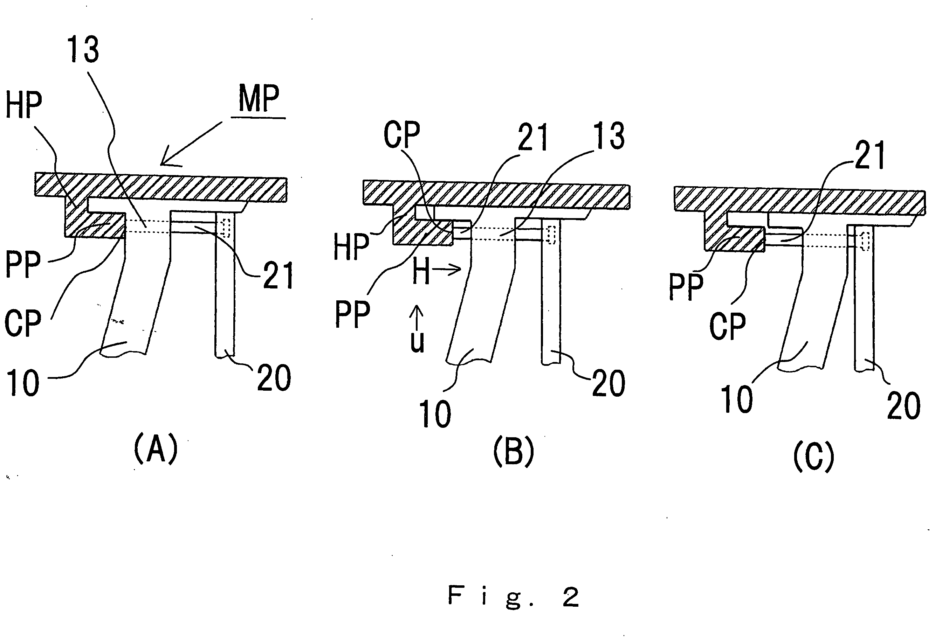

[Fig. 2] A figure is for explaining the configuration example in which the mold release assistance device is applied to the molded article having the suspension portion and the protruding portion formed downward and the operation and the function in the case of mold release according to the mold release assistance device of the molded article in the present invention, with (A) being the operating state at the time of the mold release start, (B) being the operating state in the middle of the shaft rise, and (C) being the operating state at the time of the maximum rise of the shaft.

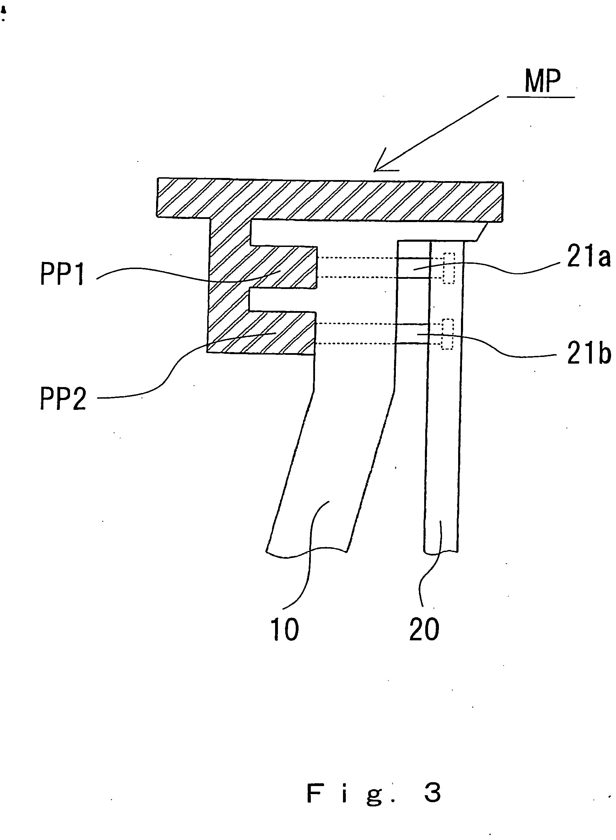

[Fig. 3] A figure shows the configuration example in which the mold release assistance device is applied to the molded article in which two protruding portions are formed downward according to the mold release assistance device of the molded article in the present invention.

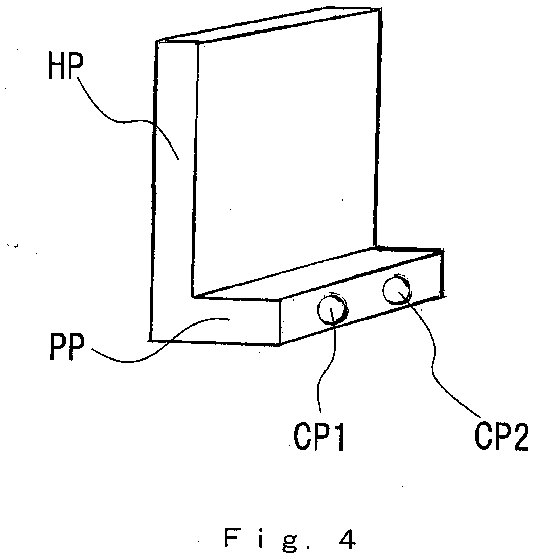

[Fig. 4] A figure shows the configuration example of the suspension portion and the protruding portion and the arrangement example and the arrangement number of the part to contact the tip of the pin member according to the mold release assistance device of the molded article in the present invention.

### DESCRIPTION OF REFERENCE NUMELALS

- 10: Inclined shaft
- 11: Vertical region
- 12: Inclined slide region
- 13: Horizontal through-hole
- 14: Horizontal portion
- 20: Vertical shaft
- 21, 21a, 21b: Pin member
- 30: Hold-down target
- MP: Molded article
- HP: Suspension part
- PP: Protruding part
- CP, CP1, CP2: Contacted part of tip of pin member
- U: Rising direction
- H: Direction of horizontal movement

### MODES FOR CARRYING OUT INVENTION

Hereinafter, with reference to the attached drawing showing the principal part of the mold release assistance device (only henceforth a "mold release assistance device") of the molded article according to the present invention, it describes about the configuration example in the mold release assistance device according to the present invention, and the operation and the function of the device in the case of mold release. The mold release assistance device can reliably and quickly (smoothly) perform the releasing process without hindering the molded article after molding, when molding the molded article such as a molded article having an undercut portion which has a complicated shape as the molding target, for example. The mold release assistance device supports smooth release without giving excessive stress to the molded article which causes deformation, partial recess formation, or the like when demolding from the mold is started after completion of the molding process.

Fig.1 is the figure for describing the basic configuration example of the mold release assistance device and the operation and the function of the device in the case of the mold release, (A) shows the operating state at the time of the mold release start, (B) shows the operating state in the middle of the shaft rise, and (C) shows the operating state at the time of the maximum rise of the shaft, respectively. The portion shown with the dotted line in the figure expresses the portion hidden by the inside. Expression of the "above", "lower (under)", "right side", "left side", "top surface", "lower surface", etc. is expressed based on the direction in the state where it was illustrated by Drawings.

A mold release assistance device is the mold release device of the molded article in the mold provided with the inclined slide mechanism, and is a simple structure constituted by the inclined shaft 10 which is fundamentally provided with the horizontal through-hole 13 and the vertical shaft 20 which fixed the pin member 21 as shown in Fig.1.

The inclined shaft 10 forms in an upper side the horizontal portion 14 which makes a right angle, and the part in near an upper end part forms the vertically-shaped vertical region 11. The horizontal through-hole 13 is horizontally opened in the vertical region, and the lower side of the vertical region serves as the inclined slide region 12 processed to tilt the left outside direction. The bend angle was not specified strictly. The top surface of the horizontal portion 14 abuts against the cavity portion located above this. The left side of the vertical region 11 abuts against the surfaces of the suspension part HP and the protruding part PP which are formed under the molded article, and the right side of the vertical region 11 is made into the vertical shaft 20 in parallel.

The vertical shaft 20 is parallel to the vertical region 11 of the inclined shaft in the whole vertical direction and is substantially the same length as the inclined shaft. The pin member 21 is fixed inside near the upper end of the inclined shaft. The right side end part of the pin member 21 is fixed to the inclined shaft. The left side end part of the pin member 21 which contacts the hold-down target 30 is inserted in the horizontal through-hole 13 formed in the vertical region 11 of the inclined shaft to be free to move horizontally without resistance. The fixing means of the pin member can be applied the means of common use, such as screwing and welding. The vertical region 11 of the inclined slide is processed so that it may become the same as that of form corresponding according to the form of the suspension part HP and the protruding part PP formed under the molded article MP which made into the applied object of the present invention. The inclined shaft, the vertical shaft and the pin member are preferably made of metal, more preferably made of hard metal.

The rise-and-fall guiding part is provided so as to be fixed in the mold, the rise-and-fall guiding part has a guide hole for receiving each of them so as to be penetrable from the lower side of the inclined shaft and the vertical shaft. According to guidance of the rise-and-fall guiding part, the horizontal movement to the vertical shaft side of the inclined shaft and the simultaneous rise-and-fall movement of the inclined shaft and the vertical shaft are performed reliably.

Next, it describes about the operation and the function of the mold release assistance device according to the present invention with reference to Fig.1 and Fig.2. Fig.2 is the figure for explaining the configuration example in which the mold release assistance device is applied to the molded article having the suspension portion and the protruding portion formed downward and the operation and the function in the case of mold release, (A) shows the operating state at the time of the mold release start, (B) shows the operating state in the middle of the shaft rise, and (C) shows the operating state at the time of the maximum rise of the shaft, respectively.

The inclined shaft 10 and the vertical shaft 20 move vertically at the same time by a synchronous state. The inclined shaft has a function of an inclined slide mechanism, performs the inclined slide movement, and rises in the U direction and moves horizontally in the H direction to approach the vertical shaft side when the release process proceeds. The vertical shaft performs only rise-and-fall movement simultaneously with the inclined shaft, the interval with the suspension part HP and the protruding part PP is unchanged from the mold release start, even if the shaft rises by proceeding of the releasing process, horizontal movement is not performed. A tip of the pin member is in contact with a hold-down target 30 in the state where it penetrated to the horizontal through-hole 13 at the time of the mold release start, and is in contact with the hold-down target 30 without leaving even when the shaft is maximally raised due to the progress of the releasing process.

The mold release assistance device operates as follows, and exhibits a function. As shown in Fig.2 (A), at the time of the mold release start, the tip direction portion of the pin member contacts the tip of the protruding part PP in the state where it penetrated to the horizontal through-hole 13, and the interval of the inclined shaft and the vertical shaft has become the maximum. Then, as shown in Fig.2 (B), both shafts move upwards in U direction according to proceed of the release process, the inclined shaft also performs an approaching movement toward the vertical shaft side along with the upward movement. By these movements, the vertical region 11 of the inclined shaft horizontally moves in the H direction to separate from the suspension part HP and the protruding part PP, the tip of the pin member projects from the through-hole to contact at the tip of the protruding part PP.

In the state where both shafts are raised to the maximum, as shown in Fig.2 (C), the vertical region 11 of the inclined shaft separates from the suspension part HP and the protruding part PP. The tip of the pin member continues to contact the protruding part PP in a state of protruding from the through hole to the maximum and presses a hold-down target so as not to move. Thereafter, the molded article is pushed upward while the tip of the pin member presses the hold-down object, and the release process is completed. With such operation and function, the mold release assistance device assists and supports the release process so as to be carried out smoothly.

The contact to the protruding part tip in the tip of the pin member means not only applying a pressing force from the pin member side but simply touching it and is in the state suppressed so that the hold-down target may not move. In order to more reliably release the protruding part formed under the molded article, in the present invention, when both shafts at the time of mold release are maximally raised, it is also possible to horizontally move the vertical shaft in the direction away from the hold-down target 30.

Next, referring to Fig.3, the hold-down target of the molded article to which the mold release assistance device according to the present invention is applied will be described. Fig.3 is the figure showing the configuration example to which the mold release assistance device is applied to the molded article in which two protruding parts are formed downward. The portion denoted by the slash among the figure shows the molded article in which the suspension part and the protruding part (undercut part) are formed downward. Since it mentioned above about the operation and the function of the pin member, it omits here.

As shown in Fig.3, two protruding part PP1 and PP2 are formed under the molded article MP, and each tip of the two pin members 21a and 21b contacts at each tip of a protruding part, respectively. It is constituted so that the mechanism for operating both pin members may operate simultaneously. Both the tip of the pin member is suppressed so that each protruding part PP1 and PP2 may be contacted, it may press down and the hold-down target may not move, until the molded article is pushed up and mold release is carried out, as mentioned above. Even if it is the releasing process of the molded article in which two protruding parts are formed downward, the mold release assistance device will assist and support so that the releasing process may be carried out smoothly.

Although Fig.3 shows the molded article in which two protruding parts (Fig.2 one piece) (undercut part) are formed downward as the molded article applied to the present invention, the number of the protruding parts which the molded article applied to the present invention is not limited to these, and are formed may be three or more plurality, and may be for example, a complicated-shaped multi-pole connector etc. In this case, the object can be achieved by providing and operating the mechanism for operating simultaneously the pin member and the pin of the number corresponding to the number of protruding parts. In the case of the molded article in which many protruding parts are formed like the multi-pole connector, an appropriate number of pin members and pins may be provided with the operation mechanism in the ranges that can prevent the breakage and damage of the hold-down target in the release process, not the number corresponding to all the protrusions

Next, the portion where the pin member contacts and presses will be described with reference to Fig. 4. Fig.4 shows the configuration example of the suspension portion and the protruding portion and the arrangement example and the arrangement number of the part to contact the tip of the pin member according to the mold release assistance device in the present invention. In the figure, the suspension part HP and the protruding part PP form L shape as a whole, and the suspension part is longwise, and the protruding part has a linear cross section and a wide lateral direction.

Although the portion to be pressed by the tip of the pin member is basically determined by the portion which is difficult to come off and is easily broken at the time of mold release, among the forms formed below the molded article, the contacted part of the tip of the pin member is arbitrarily determined by the form, length, thickness, and wide width of the protruding part, etc., and can determine the position and the arrangement number of the part CP which the tip of the pin member contacts according to the form of the protruding part.

As shown in Fig.4, in the protruding part PP having a linear cross section and a wide lateral direction, two places CP1 and CP2 in the contacted part of the tip of the pin member (the hold-down part of the pin member) is arranged at equal intervals on the tip surface of the projecting part. Here, although the shape of the protruding part is linear in cross section, the contacted part of the tip of the pin member can be arranged near the vertex of the protruding part when the cross section is angular or curved shape, it is possible to make three or more contacted parts depending on the width of the lateral width.

The timing of executing such the mold release support operation should be determined in consideration of an adequate processing time without excess or deficiency, considering various conditions such as the type of plastics used as raw materials, the influence of supplementary materials used, the structure of the molded article, ambient temperature.

### INDUSTRIAL APPLICABILITY

According to the present invention, smooth mold release of the molded article can be carried out, it goes without saying that it can contribute to the industry of molding and manufacturing the molded article, the resin molded articles are used in the wide range of fields such as household electrical appliances and other daily necessaries, office supplies, various industrial machinery and equipment, transportation and transportation agencies such as automobiles, railways, aircraft, etc., the present invention is used for manufacturing molded articles in such fields and is expected to contribute to the wide range of industrial fields such as electric and electronic equipment and machine tool manufacturing.

Furthermore, the present invention improves the problem at the time of molding of the resin molded article was excellent in the function and the characteristic based on the fact that the use of resin molded article is increasingly expanding as the resin itself improves and the molding technology develops, it is possible to make effective use of engineering plastics in many industrial fields.

## Claims

1. A mold release assistance device of a molded article (MP) in a mold comprising an inclined slide mechanism, the device comprising
an inclined shaft (10) which forms on an upper side thereof a horizontal portion (14) which makes a right angle, which forms near a part of an upper end thereof a vertically-shaped vertical region, the molded article side of the vertical region (11) being processed to the shape corresponding to the shape of a suspension part (HP) and a protruding part (PP) which are formed under the molded article (MP); and
a vertical shaft (20) which is formed so that overall the vertical shaft is parallel to the vertical region (11) of the inclined shaft (10) and is substantially the same length as the inclined shaft (10), and
wherein the mold release assistance device is configured to facilitate smooth release due to the following
the inclined shaft (10) and the vertical shaft (20) move vertically at the same time, and in conjunction with the approach of the inclined shaft (10) to the vertical shaft (20) when the inclined shaft (10) rises and the tip of a pin member (21, 21a, 21b) is in contact with a hold-down target (30) and holds down the target so that the target does not move,
**characterized in that**
the vertically-shaped vertical region (11) has a horizontal through-hole (13) in the vertical region (11), and that the inclined shaft (10) is formed so that a lower end of the vertical region (11) becomes an inclined slide region (12) processed to tilt outward, and
the pin member (21, 21a, 21b) of the vertical shaft (20) penetrates the horizontal through-hole (13) formed in the vertical region of the inclined shaft (10) and is fixed in the horizontal direction so as to be freely moveable, and the tip of the pin member (21, 21a, 21b) which penetrates the horizontal through-hole projects from the through-hole.

2. The mold release assistance device of the molded article (MP) according to claim 1, wherein the pin member (21, 21a, 21b) fixed to the vertical shaft (20) and a mechanism for operating the pin member (21, 21a, 21b) are provided by the member according to the number of the protruding part (PP) to contact the tip of the pin member and are operated simultaneously.

3. The mold release assistance device of the molded article (MP) according to any of claims 1 and 2, wherein a position and an arrangement number of a part in the protruding part (PP) formed under the molded article (MP) to contact the tip of the pin member (21, 21a, 21b) are determined according to a form of the protruding part (PP).

4. The mold release assistance device of the molded article (MP) according to any one of claims 1 to 3, wherein the inclined shaft (10), the vertical shaft (20) and the pin member (21, 21a, 21b) are made of metal.

## Patentansprüche

1. Vorrichtung zur Unterstützung der Auslösung eines Formteils (MP) in einer Form, die einen geneigten Gleitmechanismus umfasst, wobei die Vorrichtung umfasst
einen geneigten Schaft (10), der auf einer Oberseite einen horizontalen Abschnitt (14) bildet, der einen rechten Winkel bildet, der in der Nähe eines Teils eines oberen Endes davon einen vertikal geformten Vertikalbereich bildet, wobei die Seite des Vertikalbereichs (11) des Formteils zu der Form verarbeitet wird, die der Form eines Aufhängungsteils (HP) und eines vorstehenden Teils (PP) entspricht, die unter dem Formteil (MP) gebildet sind; und
einen vertikalen Schaft (20), der so ausgebildet ist, dass der vertikale Schaft insgesamt parallel zum Vertikalbereich (11) des geneigten Schafts (10) verläuft und im Wesentlichen die gleiche Länge wie der geneigte Schaft (10) aufweist, und
wobei die Vorrichtung zur Unterstützung der Formteilauslösung konfiguriert ist, um eine reibungslose Auslösung aufgrund der folgenden Faktoren zu ermöglichen
der geneigte Schaft (10) und der vertikale Schaft (20) bewegen sich gleichzeitig vertikal, und zwar in Verbindung mit dem Annähern des geneigten Schafts (10) an den vertikalen Schaft (20), wenn der geneigte Schaft (10) ansteigt und die Spitze eines Stiftelements (21, 21a, 21b) mit einem Festhalteziel (30) in Kontakt steht und das Ziel so festlegt, dass sich das Ziel nicht bewegt,
**dadurch gekennzeichnet, dass**
der vertikal geformte Vertikalbereich (11) ein horizontales Durchgangsloch (13) im Vertikalbereich (11) aufweist, und dass der geneigte Schaft (10) so ausgebildet ist, dass ein unteres Ende des Vertikalbereichs (11) zu einem geneigten Gleitbereich (12) wird, der nach außen geneigt ist, und
das Stiftelement (21, 21a, 21b) des vertikalen Schafts (20) das im Vertikalbereich des geneigten Schafts (10) gebildete horizontale Durchgangsloch (13) durchdringt und in horizontaler Richtung frei beweglich befestigt ist, und die Spitze des Stiftelements (21, 21a, 21b), die das horizontale Durchgangsloch durchdringt, aus dem Durchgangsloch ragt.

2. Vorrichtung zur Unterstützung des Auslösens der Form des Formteils (MP) nach Anspruch 1, wobei das am vertikalen Schaft befestigte Stiftelement (21, 21a, 21b) und ein Mechanismus zum Betreiben des Stiftelements (21, 21a, 21b) von dem Element gemäß der Anzahl der vorstehenden Teile (PP) vorgesehen sind, um die Spitze des Stiftelements zu kontaktieren und die gleichzeitig betrieben werden.

3. Vorrichtung zur Unterstützung des Auslösens der Form des Formteils (MP) nach einem der Ansprüche 1 oder 2, wobei eine Position und eine Anordnungsnummer eines Teils in dem vorstehenden Teil (PP), das unter dem Formteil (MP) gebildet ist, um die Spitze des Stiftelements (21, 21a, 21b) zu kontaktieren, gemäß einer Form des vorstehenden Teils (PP) bestimmt werden.

4. Vorrichtung zur Unterstützung des Auslösens der Form des Formteils (MP) nach einem der Ansprüche 1 bis 3, wobei der geneigte Schaft (10), der vertikale Schaft (20) und das Stiftelement (21, 21a, 21b) aus Metall hergestellt sind.

## Revendications

1. Dispositif d'assistance au démoulage d'un article moulé (MP) dans un moule comprenant un mécanisme de coulissement incliné, le dispositif comprenant :
un arbre incliné (10) qui forme sur son côté supérieur, une partie horizontale (14) qui fait un angle droit, qui forme à proximité d'une partie de son extrémité supérieure, une région verticale de forme verticale, le côté de l'article moulé de la région verticale (11) étant traité à la forme correspondant à la forme d'une partie de suspension (HP) et d'une partie en saillie (PP) qui sont formées sous l'article moulé (MP) ; et
un arbre vertical (20) qui est formé de sorte que la totalité de l'arbre vertical est parallèle à la région verticale (11) de l'arbre incliné (10) et est sensiblement de la même longueur que l'arbre incliné (10), et
dans lequel le dispositif d'assistance au démoulage est configuré pour faciliter le démoulage en douceur en raison des éléments suivants :
l'arbre incliné (10) et l'arbre vertical (20) se déplacent verticalement en même temps, et conjointement avec l'approche de l'arbre incliné (10) par rapport à l'arbre vertical (20) lorsque l'arbre incliné (10) remonte et que la pointe d'un élément de broche (21, 21a, 21b) est en contact avec une cible de maintien (30) et maintient la cible de sorte que la cible ne bouge pas,
**caractérisé en ce que** :
la région verticale de forme verticale (11) a un trou débouchant horizontal (13) dans la région verticale (11), et **en ce que** l'arbre incliné (10) est formé de sorte qu'une extrémité inférieure de la région verticale (11) devient une région de coulissement inclinée (12) traitée pour s'incliner vers l'extérieur, et
l'élément de broche (21, 21a, 21b) de l'arbre vertical (20) pénètre dans le trou débouchant horizontal (13) formé dans la région verticale de l'arbre incliné (10) et est fixé dans la direction horizontale afin d'être librement mobile, et la pointe de l'élément de broche (21, 21a, 21b) qui pénètre dans le trou débouchant horizontal fait saillie du trou débouchant.

2. Dispositif d'assistance au démoulage d'un article moulé (MP) selon la revendication 1, dans lequel l'élément de broche (21, 21a, 21b) fixé sur l'arbre vertical (20) et un mécanisme pour actionner l'élément de broche (21, 21a, 21b) sont prévus par l'élément selon le nombre de parties en saillie (PP) pour entrer en contact avec la pointe de l'élément de broche et sont actionnées simultanément.

3. Dispositif d'assistance au démoulage d'un article moulé (MP) selon l'une quelconque des revendications 1 et 2, dans lequel une position et un nombre d'agencement d'une partie dans la partie en saillie (PP) formée sous l'article moulé (MP) pour entrer en contact avec la pointe de l'élément de broche (21, 21a, 21b) sont déterminés selon une forme de la partie en saillie (PP).

4. Dispositif d'assistance au démoulage d'un article moulé (MP) selon l'une quelconque des revendications 1 à 3, dans lequel l'arbre incliné (10) l'arbre vertical (20) et l'élément de broche (21, 21a, 21b) sont réalisés à partir de métal.
